**Europäisches Patentamt**

**European Patent Office**

**Office européen des brevets**

(19)

(11) Veröffentlichungsnummer: **0 004 278**
**B1**

# EUROPÄISCHE PATENTSCHRIFT

(12)

(45) Veröffentlichungstag der Patentschrift:
**07.10.81**

(21) Anmeldenummer: **79100416.1**

(22) Anmeldetag: **13.02.79**

(51) Int. Cl.³: **B 01 D 17/06**, C 25 B 7/00

(54) **Verfahren zur elektrophoretischen Brechung von Emulsionen.**

(30) Priorität: **25.02.78 DE 2808225**

(43) Veröffentlichungstag der Anmeldung:
**03.10.79 Patentblatt 79/20**

(45) Bekanntmachung des Hinweises auf die Patenterteilung:
**07.10.81 Patentblatt 81/40**

(84) Benannte Vertragsstaaten:
**BE CH DE FR GB IT NL**

(56) Entgegenhaltungen:
**DE-A-2 158 791**
**DE-A-2 354 596**
**DE-A-2 555 175**
**DE-B-1 914 267**
**DE-C-171 277**
**GB-A-1 308 470**
**GB-A-1 378 475**
**US-A-2 083 798**
**US-A-3 582 614**
**US-A-3 769 188**

(73) Patentinhaber: **BAYER AG, Zentralbereich Patente, Marken und Lizenzen, D-5090 Leverkusen 1, Bayerwerk (DE)**

(72) Erfinder: **Larbig, Wolfgang, Dr., Buschstrasse 151, D-4150 Krefeld (DE)**

## Verfahren zur elektrophoretischen Brechung von Emulsionen

Aus der DE-B-19 14 267 ist ein Verfahren zur elektrischen Behandlung von eine hohe elektrische Leitfähigkeit aufweisenden Dispersionen bekannt, demgemäss die wässrige Phase und die organische Phase durch eine elektrische Behandlung der Dispersion getrennt werden. Wichtig für das Gelingen der Trennung der beiden Phasen ist, dass eine Verwirbelung der Dispersion und damit eine Erhöhung des Dispersionsgrades vermieden wird mit dem Ziel, Teilchen mit gesteigerter Grösse zu bilden, die sich leicht aufgrund eines Unterschieds in den spezifischen Gewichten abtrennen lassen (vgl. Spalte 2, Zeilen 37 bis 44 der DE-B-19 14 267). Dies erreicht man dadurch, dass die zu behandelnde Dispersion einem Beruhigungsbereich zugeführt wird, in dem im wesentlichen gleichförmige Strömungsbedingungen herrschen.

Gegenstand der Erfindung ist ein Verfahren zur elektrophoretischen Brechung von elektrisch leitenden Emulsionen, das dadurch gekennzeichnet ist, dass man bei Emulsionen mit einer elektrischen Leitfähigkeit von grösser als 2000 μ 1/Ohm·cm die Leitfähigkeit durch Erhöhung des Dispersionsgrades auf Werte im Bereich von ca. 0,1 bis ca. 2000 μ 1/Ohm·cm einstellt und anschliessend die Emulsionen beim Passieren eines Gleichspannungsfeldes von ca. 100 bis ca. 1000 Volt bricht.

Als Emulsionen, die nach dem erfindungsgemässen Verfahren gebrochen werden können, seien z.B. genannt: Emulsionen bestehend aus etwa 3 bis 7 Vol.-Teilen Nitrobenzol und etwa 1 bis 3 Vol.-Teilen 1 bis 80 Gew.-%iger Abfallschwefelsäure, wie sie beim Nitrierprozess anfällt. Weiterhin seien genannt: Emulsionen aus ca. 40 bis 60 Gew.-%iger Phosphorsäure und Nitrobenzol im Verhältnis von etwa 1:9 bis 2:3 oder 40 bis 60 Gew.-%iger Phosphorsäure und 2-Äthylhexanol im Verhältnis von etwa 1:9 bis 2:3 oder 5 bis 20 Gew.-%iger Natronlauge und 2-Äthylhexanol im Verhältnis von etwa 1:9 bis 2:3.

Die bei der Nitrierung von Benzol zu Nitrobenzol anfallende Abfallschwefelsäure besteht zu 60-90 Gew.-% aus Schwefelsäure, der Rest ist Wasser.

Da bei zahlreichen Wasch- und Reinigungsprozessen als auch bei chemischen Produktionsverfahren Emulsionen mit einer elektrischen Leitfähigkeit, die ausserhalb der zuvor erwähnten Leitfähigkeitsbereiche liegt, erhalten werden, ist es für die wirkungsvolle Brechung der Emulsionen im Gleichspannungsfeld erforderlich, die elektrische Leitfähigkeit der Emulsionen auf Werte im Bereich von etwa 0,1 bis etwa 2000 μ 1/Ohm·cm, bevorzugt 1 bis 1000 μ 1/Ohm·cm, besonders bevorzugt 5 bis 500 μ 1/Ohm·cm, einzustellen.

Bei einer zu hohen elektrischen Leitfähigkeit der Emulsionen besteht nämlich die Gefahr, dass ein zur elektrophoretischen Brechung notwendiges Gleichspannungsfeld mit ca. 100 bis 1000 Volt nicht aufgebaut werden kann und die elektrophoretische Brechung in eine Elektrolyse umschlägt.

Werden bei Wasch- und Reinigungsprozessen Emulsionen erhalten, deren elektrische Leitfähigkeit von vornherein im Bereich von etwa 0,1 bis etwa 2000 μ 1/Ohm·cm liegt, so können diese Emulsionen ohne weitere Behandlung direkt beim Passieren eines Gleichspannungsfeldes von etwa 100 bis etwa 1000 Volt gebrochen werden.

Um die elektrophoretische Brechung von elektrisch leitenden Emulsionen auch auf Bereiche mit hohen elektrischen Leitfähigkeiten bis beispielsweise 100 000 μ 1/Ohm·cm ausdehnen zu können, war es erforderlich, Methoden zu finden, welche die elektrische Leitfähigkeit der Emulsionen zu vermindern vermögen.

Dabei hat sich gezeigt, dass bei Emulsionen mit elektrischen Leitfähigkeiten von grösser als 2000 μ 1/Ohm·cm die Leitfähigkeit durch Erhöhen des Dispersionsgrades der Emulsionen vermindert werden kann.

Die Erhöhung des Dispersionsgrades gelingt mit den üblichen physikalisch/mechanischen Dispersionsmethoden wie Rühren, Umpumpen, Ultraschall usw. Beschleunigt wird dieser Prozess mitunter durch Zusatz von Emulgatoren wie Natriumlaurylsulfat, sulfonierte und neutralgestellte Ricinusöle, sulfonierte und neutralgestellte höhere Alkohole.

Die Menge der zuzusetzenden Emulgatoren ist nicht kritisch. Sie hängt u.a. von der Zusammensetzung der Emulsionen ab und kann gegebenenfalls durch Vorversuche ermittelt werden.

Im allgemeinen werden die Emulsionen solange einer Dispergierung unterworfen, bis sich die elektrischhe Leitfähigkeit auf die zuvor erwähnten Leitfähigkeitsbereiche eingestellt hat. Die Dauer der Behandlung ist dabei vor allem von der Art der Zusammensetzung der Emulsion abhängig und kann gegebenenfalls vorher ermittelt werden.

Das erfindungsgemässe Verfahren kann bei allen im Emulsionsbereich vorkommenden Temperaturen durchgeführt werden.

Das erfindungsgemässe Verfahren kann wie folgt durchgeführt werden: Eine Emulsion, bestehend z.B. aus 3 Vol.-Teilen Nitrobenzol und 2 Vol.-Teilen 70 Gew.-%iger Abfallschwefelsäure, wie sie beispielsweise bei der Nitrierung von Benzol anfällt, mit einer elektrischen Leitfähigkeit von 10 000 bis 20 000 μ 1/Ohm·cm, wird durch Rühren oder durch Umpumpen mit einer schnell laufenden Pumpe (1500 bis 2500 UpM) auf eine elektrische Leitfähigkeit von ca. 300 bis 400 μ 1/Ohm·cm gebracht und durchfliesst anschliessend beispielsweise einen rohrförmigen Elektrodenraum. Die Emulsion passiert dabei ein Gleichspannungsfeld von etwa 100 bis 1000 Volt, bevorzugt 300 bis 500 Volt. Die Stromstärke beträgt ca. 0,5 bis 1 Ampere. Durch einfache Regelung des Emulsionsflusses wird für eine stete Flutung des Elektrodenraumes gesorgt, so dass selbst bei eventuellen elektrischen Überschlägen zwischen den Elektroden keine Gefahr einer Zündung von gegebenenfalls zündfähigen Gasgemischen im Elektrodenraum besteht. Nach einer Verweilzeit von etwa 5 bis etwa 30 Minuten in einem Trennbehälter können die getrennten Phasen Nitrobenzol und 70 Gew.-%ige Abfallschwefelsäure aus dem Behälter entnommen werden.

Das erfindungsgemässe Verfahren zeichnet sich durch folgende Vorteile gegenüber anderen Verfahren zur Brechung von Emulsionen aus:

Das erfindungsgemässe Verfahren ist praktisch wartungsfrei und frei von mechanischem Verschleiss. Dadurch gestaltet sich das Verfahren besonders wirtschaftlich. Die pro Stunde durchzusetzende Emulsionsmenge unterliegt keiner Begrenzung. Das Verfahren kann in explosionsgefährdeten Bereichen eingesetzt werden und ist unempfindlich gegenüber feinen oder groben Verunreinigungen in den Emulsionen. Der Trenneffekt ist hoch und die Bestandteile werden – bis auf die echte Löslichkeit der Komponenten untereinander – in reiner Form erhalten. Da die elektrophoretische Brechung der Emulsionen bereits in sehr kleinen Elektrodenräumen ausserordentlich schnell erfolgt, ist die Raum/Zeit-Ausbeute besonders gross.

Die folgenden Beispiele dienen zur Verdeutlichung des erfindungsgemässen Verfahrens.

Beispiel 1

In einer einfachen Umlaufapparatur bestehend aus Vorlage mit Rührer und Umlaufpumpe, Elektrophoresezellle und Trennbehälter wurde eine Emulsion aus 3 Vol.-Teilen Rohnitrobenzol und 2 Vol.-Teilen 70 Gew.-%iger Abfallschwefelsäure, bestehend aus 70 Gew.-% Schwefelsäure und 30 Gew.-% Wasser, bei 50°C umgepumpt. Nachdem die Leitfähigkeit von etwa 15 000 $\mu$ 1/Ohm·cm auf 400 $\mu$ 1/Ohm·cm abgesenkt worden war, konnte in der Elektrophoresezelle die Emulsion unter Anlegen einer Gleichspannung von 300 Volt bei 0,6 bis 0,8 Ampere gebrochen werden. Das nach einer Verweilzeit von 20 Minuten aus dem Trennbehälter ablaufende Nitrobenzol hatte einen Restsäuregehalt von 0,3 Gew.-%. Der Säuregehalt bei anderen Trennverfahren z.B. beim Passieren eines Separators oder Coalescers liegt bei 0,6 bis 0,8 Gew.-%.

Beispiel 2

Die nachstehenden Tabellen geben die Abnahme der elektrischen Leitfähigkeit von Emulsionen aus verschiedenen Komponenten wieder. Die zugrundeliegenden Versuche wurden wie folgt durchgeführt:

In einem 2-Liter-Becherglas wurden die Komponenten mit einem Doppelflügelrührer bei 700 UpM gerührt. Dadurch wurde der Dispersionsgrad erhöht. In bestimmten Zeitabständen wurde während des Rührens die Leitfähigkeit gemessen.

a) 1 Gew.-%ige Abfallschwefelsäure:Nitrobenzol = 2:3.

Temperatur 23°C.

Nach 5 Sekunden 1499 $\mu$ 1/Ohm·cm
Nach 15 Sekunden 968 $\mu$ 1/Ohm·cm
Nach 30 Sekunden 158 $\mu$ 1/Ohm·cm
Nach 60 Sekunden 37 $\mu$ 1/Ohm·cm
Nach 90 Sekunden 26 $\mu$ 1/Ohm·cm
Nach 120 Sekunden 26 $\mu$ 1/Ohm·cm (Endwert)

b) 10 Gew.-%ige Abfallschwefelsäure:Nitrobenzol = 2:3.

Temperatur 23°C.

Nach 5 Sekunden 1056 $\mu$ 1/Ohm·cm
Nach 15 Sekunden 361 $\mu$ 1/Ohm·cm
Nach 30 Sekunden 246 $\mu$ 1/Ohm·cm
Nach 60 Sekunden 211 $\mu$ 1/Ohm·cm
Nach 90 Sekunden 202 $\mu$ 1/Ohm·cm
Nach 120 Sekunden 141 $\mu$ 1/Ohm·cm
Nach 150 Sekunden 132 $\mu$ 1/Ohm·cm
Nach 180 Sekunden 114 $\mu$ 1/Ohm·cm (Endwert)

c) 30 Gew.-%ige Abfallschwefelsäure:Nitrobenzol = 2:3.

Temperatur 23°C.

Nach 5 Sekunden 2816 $\mu$ 1/Ohm·cm
Nach 15 Sekunden 1364 $\mu$ 1/Ohm·cm
Nach 30 Sekunden 361 $\mu$ 1/Ohm·cm
Nach 60 Sekunden 317 $\mu$ 1/Ohm·cm
Nach 90 Sekunden 255 $\mu$ 1/Ohm·cm
Nach 150 Sekunden 246 $\mu$ 1/Ohm·cm
Nach 180 Sekunden 238 $\mu$ 1/Ohm·cm (Endwert)

d) 50 Gew.-%ige Abfallschwefelsäure:Nitrobenzol = 2:3.

Temperatur 23°C.

Nach 5 Sekunden 3872 $\mu$ 1/Ohm·cm
Nach 15 Sekunden 1716 $\mu$ 1/Ohm·cm
Nach 30 Sekunden 651 $\mu$ 1/Ohm·cm
Nach 60 Sekunden 422 $\mu$ 1/Ohm·cm
Nach 120 Sekunden 255 $\mu$ 1/Ohm·cm
Nach 180 Sekunden 220 $\mu$ 1/Ohm·cm (Endwert)

e) 70 Gew.-%ige Abfallschwefelsäure:Nitrobenzol = 2:3.

Temperatur 23°C.

Nach 5 Sekunden 3344 $\mu$ 1/Ohm·cm
Nach 15 Sekunden 2992 $\mu$ 1/Ohm·cm
Nach 30 Sekunden 2552 $\mu$ 1/Ohm·cm
Nach 60 Sekunden 1672 $\mu$ 1/Ohm·cm
Nach 120 Sekunden 1144 $\mu$ 1/Ohm·cm
Nach 180 Sekunden 924 $\mu$ 1/Ohm·cm
Nach 240 Sekunden 748 $\mu$ 1/Ohm·cm
Nach 270 Sekunden 638 $\mu$ 1/Ohm·cm (Endwert)

f) 80 Gew.-%ige Abfallschwefelsäure:Nitrobenzol = 2:3.

Temperatur 23°C.

Nach 5 Sekunden 2464 $\mu$ 1/Ohm·cm
Nach 15 Sekunden 2156 $\mu$ 1/Ohm·cm
Nach 90 Sekunden 704 $\mu$ 1/Ohm·cm
Nach 150 Sekunden 554 $\mu$ 1/Ohm·cm
Nach 270 Sekunden 343 $\mu$ 1/Ohm·cm
Nach 360 Sekunden 220 $\mu$ 1/Ohm·cm
Nach 480 Sekunden 189 $\mu$ 1/Ohm·cm (Endwert)

g) 70 Gew.-%ige Abfallschwefelsäure:Nitrobenzol = 3:7.
Temperatur 23°C.

Nach   5 Sekunden 1584 μ 1/Ohm·cm
Nach  15 Sekunden  616 μ1/Ohm·cm
Nach  60 Sekunden  422 μ 1/Ohm·cm
Nach 120 Sekunden  361 μ 1/Ohm·cm
Nach 180 Sekunden  326 μ 1/Ohm·cm (Endwert)

h) 70 Gew.-%ige Abfallschwefelsäure:Nitrobenzol = 1:4.
Temperatur 23°C.

Nach   5 Sekunden  880 μ 1/Ohm·cm
Nach  15 Sekunden  282 μ 1/Ohm·cm
Nach  30 Sekunden  194 μ 1/Ohm·cm
Nach  60 Sekunden  158 μ 1/Ohm·cm
Nach  90 Sekunden  132 μ 1/Ohm·cm (Endwert)

i) 40 Gew.-%ige Phosphorsäure:Nitrobenzol =
2:3.
Temperatur 23°C.

Nach   5 Sekunden 2904 μ 1/Ohm·cm
Nach  15 Sekunden 1584 μ 1/Ohm·cm
Nach  30 Sekunden  968 μ 1/Ohm·cm
Nach  60 Sekunden  739 μ 1/Ohm·cm
Nach 150 Sekunden  642 μ 1/Ohm·cm
Nach 300 Sekunden  572 μ 1/Ohm·cm
Nach 360 Sekunden  554 μ 1/Ohm·cm (Endwert)

j) 60 Gew.-%ige Phosphorsäure:Nitrobenzol =
2:3.
Temperatur 23°C.

Nach   5 Sekunden 4200 μ 1/Ohm·cm
Nach  15 Sekunden  968 μ 1/Ohm·cm
Nach  30 Sekunden  598 μ 1/Ohm·cm
Nach  60 Sekunden  519 μ 1/Ohm·cm
Nach 120 Sekunden  431 μ 1/Ohm·cm
Nach 180 Sekunden  396 μ 1/Ohm·cm (Endwert)

k) 40 Gew.-%ige Phosphorsäure:2-Äthylhexanol
= 2:3.
Temperatur 23°C.

Nach   5 Sekunden 1144 μ 1/Ohm·cm
Nach  15 Sekunden 1056 μ 1/Ohm·cm
Nach  30 Sekunden  704 μ 1/Ohm·cm (Endwert)

l) 10 Gew.-%ige Natronlauge:2-Äthylhexanol =
2:3.
Zusatz: Emulgator «Brillantöl».
Temperatur 23°C.

Nach   5 Sekunden 1816 μ 1/Ohm·cm
Nach  15 Sekunden 1144 μ 1/Ohm·cm
Nach  30 Sekunden  704 μ 1/Ohm·cm
Nach  60 Sekunden  176 μ 1/Ohm·cm
Nach 180 Sekunden  106 μ 1/Ohm·cm
Nach 300 Sekunden   70 μ 1/Ohm·cm (Endwert)

## Patentansprüche

1. Verfahren zur elektrophoretischen Brechung von elektrisch leitenden Emulsionen, dadurch gekennzeichnet, dass man bei Emulsionen
mit einer elektrischen Leitfähigkeit von grösser
als 2000 μ 1/Ohm·cm die Leitfähigkeit durch Erhöhung des Dispersionsgrades auf Werte im Bereich von 0,1 bis 2000 μ 1/Ohm·cm einstellt und
anschliessend die Emulsionen beim Passieren
eines Gleichspannungsfeldes von 100 bis 1000
Volt bricht.

2. Verfahren nach Anspruch 1, dadurch gekennzeichnet, dass man die elektrische Leitfähigkeit der Emulsionen auf Werte im Bereich von 1
bis 1000 μ 1/Ohm·cm einstellt.

3. Verfahren nach Anspruch 1, dadurch gekennzeichnet, dass man die elektrische Leitfähigkeit der Emulsionen auf Werte im Bereich von 5
bis 500 μ 1/Ohm·cm einstellt.

4) Verfahren nach Ansprüchen 1 bis 3, dadurch gekennzeichnet, dass man den Dispersionsgrad der Emulsionen durch Rühren, Umpumpen, Ultraschall erhöht.

5) Verfahren nach Ansprüchen 1 bis 4, dadurch gekennzeichnet, dass man zur Erhöhung
des Dispersionsgrades den Emulsionen Emulgatoren zusetzt.

## Claims

1. Process for the electrophoretic breaking of
electrically conductive emulsions, characterised
in that, in the case of emulsions with an electrical
conductivity greater than 2,000 μ 1/ohm·cm, the
conductivity is adjusted to values in the range
from 0.1 to 2,000 μ 1/ohm·cm by increasing the
degree of dispersion, and the emulsions are then
broken by passing through a constant-voltage
field of 100 to 1,000 volts.

2. Process according to Claim 1, characterised
in that the electrical conductivity of the emulsions is adjusted to values in the range from 1 to
1,000 μ 1/ohm·cm.

3. Process according to Claim 1, characterised
in that the electrical conductivity of the emulsions is adjusted to values in the range from 5 to
500 μ 1/ohm·cm.

4. Process according to Claim 1 to 3, characterised in that the degree of dispersion of the emulsions is increased by stirring, circulatory pumping or ultrasound.

5. Process according to Claims 1 to 4, characterised in that in order to increase the degree of
dispersion, emulsifiers are added to the emulsions.

## Revendications

1. Procédé de rupture par électrophorèse
d'émulsions conductrices de l'électricité, caractérisé en ce qu'on règle dans des émulsions ayant
une conductibilité électrique supérieure à 2000 μ
1/ohm·cm la conductibilité par augmentation du
degré de dispersion à des valeurs dans l'intervalle de 0,1 à 2000 μ 1/ohm·cm et en ce qu'ensuite
on rompt les émulsions par passage à travers un
champ de tension continue de 100 à 1000 volts.

2. Procédé selon la revendication 1, caractérisé en ce qu'on règle la conductibilité électrique
des émulsions à des valeurs dans l'intervalle de 1
à 1000 μ 1/ohm·cm.

3. Procédé selon la revendication 1, caractérisé en ce qu'on règle la conductibilité électrique des émulsions à des valeurs dans l'intervalle de 5 à 500 μ 1/ohm·cm.

4. Procédé selon les revendications 1 à 3, caractérisé en ce qu'on augmente le degré de dispersion des émulsions par agitation, par repompage, par des ultrasons.

5. Procédé selon les revendications 1 à 4, caractérisé en ce que pour l'augmentation du degré de dispersion on ajoute des émulsifiants aux émulsions.